# EUROPEAN PATENT APPLICATION

(11) **EP 0 848 205 A1**
(43) Date of publication of application: **17.06.1998**
(21) Application number: 97120831.9
(22) Date of filing: 27.11.1997
(51) Int. Cl.: F17C 13/04, F16K 1/30

(54) **Filling valve for LPG tanks with automatic stop device**

(30) Priority: 12.12.1996 IT MI962615
(71) Applicant: Pergola S.r.l., 25010 Ponte S. Marco (Brescia) (IT)
(72) Inventor: Cavagna, Carlo, 25011 Calcinato (Brescia) (IT)
(74) Representative: Modiano, Guido, Dr.-Ing.

(57) **Abstract**

A filling valve for LPG tanks with automatic stop device, comprising a valve body (2) which can be coupled to a tank (3) and forms a channel (5) for connecting the inside and the outside of the tank (3) and has the particularity that it comprises, in the channel (5), an obturator (6) with a first hermetic piston (7) and a second hermetic piston (8) which are operatively interconnected and act respectively on an inlet seat (11) and on an abutment (30) for connection to the inside of the tank (3). There is also provided a valve device which is actuated by the level of the liquid contained in the tank (3) and allows to position the second piston (8) on the connection abutment (30) when the preset level is reached inside the tank (3).

## Description

The present invention relates to a filling valve for LPG tanks with automatic stop device.

LPG tanks currently use valve elements provided with two closure pistons, so as to allow to perform extraordinary maintenance on the valve, replacing the components of the outermost portion of the valve, without having to empty the LPG contained in the tank.

In order to increase safety during filling operations, valves are required which prevent filling of the tank beyond a preset percentage value, so as to maintain certain safety criteria.

It is currently not possible to use double-closure valves combined with level indicators, since conventional solutions do not allow an operative connection to the transfer means used.

The aim of the present invention is indeed to eliminate the above limitation by providing a filling valve for LPG tanks with automatic stop device which allows to have a double-closure valve which is operatively connected to a level indicator which stops the incoming flow at a preset level during tank filling.

Within the scope of the above aim, a particular object of the present invention is to provide a filling valve which is structurally simple and causes no hindrance during tank filling performed with the current means used for LPG transfer.

Another object of the present invention is to provide a filling valve for LPG tanks which, by means of its particular constructive characteristics, is capable of giving the greatest assurances of reliability and safety in use.

Another object of the present invention is to provide a filling valve for LPG tanks with automatic stop device which can be easily obtained starting from commonly commercially available elements and materials and is also competitive from a purely economical point of view.

This aim, these objects and others which will become apparent hereinafter are achieved by a filling valve for LPG tanks with automatic stop device, according to the present invention, comprising a valve body which can be coupled to a tank and forms a channel for connecting the inside and the outside of the tank, characterized in that it comprises, in said channel, a flow cutoff device formed by a first hermetic piston and a second hermetic piston which are operatively interconnected and act respectively on an inlet seat and on an internal seat for connection to the inside of the tank, a level indicator being also provided which controls a third piston which stops the incoming flow, activating the closure of the second piston when a preset level is reached inside said tank.

Further characteristics and advantages of the present invention will become apparent from the following detailed description of a preferred but not exclusive embodiment of a filling valve for LPG tanks with automatic stop device, illustrated only by way of non-limitative example in the accompanying drawings, wherein:

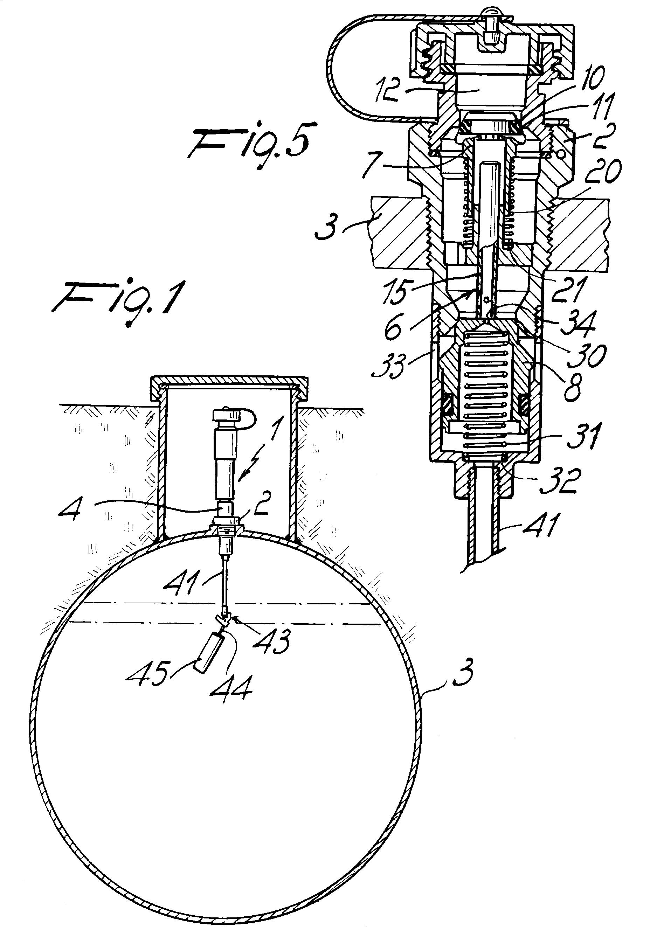

figure 1 is a schematic view of the filling valve according to the present invention, applied to a buried tank;
figure 2 is a sectional view of the filling valve in the inactive position;
figure 3 is a sectional view of the filling valve during the introduction of LPG in the tank;
figure 4 is a sectional view of the filling valve when the preset level is reached inside the tank;
figure 5 is a view of the filling valve in the embodiment without the extension in the intermediate part;

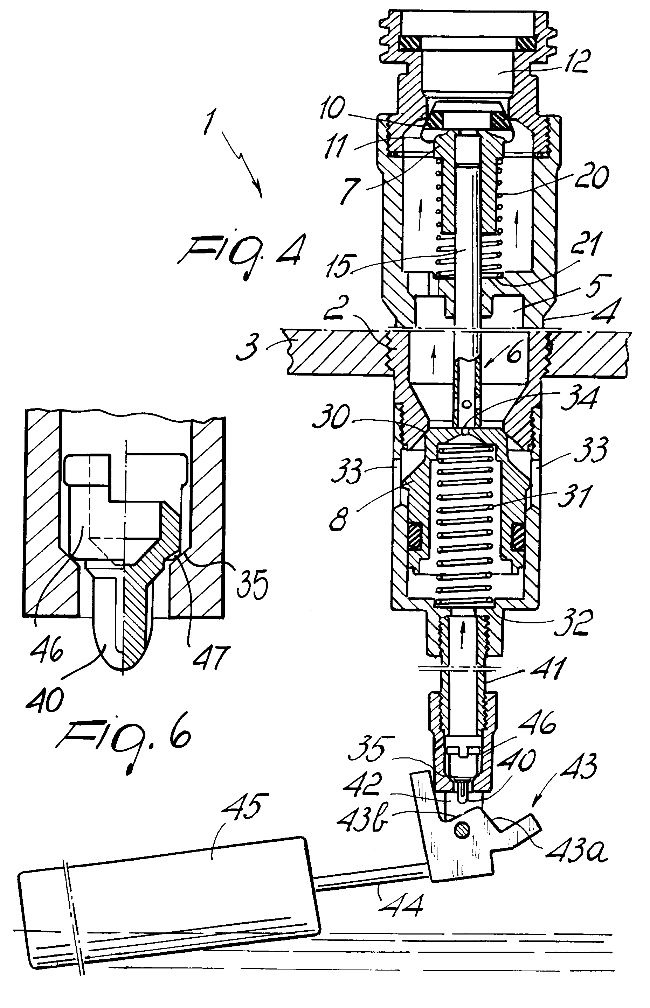

figure 6 is a partially sectional view of the third piston with the bleed notch.

With reference to the above figures, the filling valve for LPG tanks with automatic stop device, according to the present invention, generally designated by the reference numeral 1, comprises a valve body 2 which is connected to a tank generally designated by the reference numeral 3.

An intermediate body 4 can be rigidly associated with the valve body 2 and purely acts as an extension; the body 4 is not provided when it is not necessary to have an extension available, as occurs for example in the case of buried tanks.

The valve body 2 and the optional intermediate body 4 form a channel 5 for connection between the inside and the outside, inside which an obturator, generally designated by the reference numeral 6, operates; the obturator is constituted by a first hermetic piston 7 and by a second hermetic piston 8.

The first hermetic piston 7 is provided by a frustum-shaped piston with an annular sealing gasket 10, which acts on an inlet seat 11 formed at the inlet 12 for connection to a filling unit.

The first piston 7 is operatively connected to the second piston 8 by means of a rod 15, which protrudes from the piston 7 and rests on the piston 8, so that the opening thrust applied to the piston 7 causes a corresponding thrust on the piston 8.

A pusher spring, designated by the reference numeral 20, acts on the first piston 7 so as to keep it closed onto the seat 11 and acts, at the other end, on intermediate spokes 21 formed in the valve body or in the intermediate element 4 so as to act as a guide for the rod 15.

The second piston 8, when inactive, abuts metal on metal against an internal seat 30, which controls the connection to the inside of the tank and is pushed by a second pusher spring 31 which acts on an abutment 32 formed by the valve body 2.

In the region between the abutment 32 and the internal seat 30 there is provided a port 33 for connection to the inside of the tank.

The second piston 8 is connected to the level valve, provided with a third piston 46; connection occurs by means of a tubular extension 41, which protrudes towards the inside of the tank and ends, in a downward region, with a fork-like part 42 to which a cam 43 is pivoted; the cam supports a rod 44 of a floater 45.

The cam 43 is shaped so that a portion 43a arranges itself against a tip 40 of the piston 46 if the level inside the tank is not the maximum preset level; the portion 43a prevents the descent of the piston 46 and accordingly allows the liquid stream that flows through the hole 34 provided on the piston 8 to avoid remaining in the tubular extension 41.

In these conditions, as shown in figure 3, the tank is filled because the pressure applied by the inflowing gas stream overcomes the contrast of the first spring 20 and opens the piston.

Simultaneously, by means of the connection to the rod 15, the second piston 8 is moved away from the inner seat 30, allowing to introduce the LPG in the tank through the ports 33.

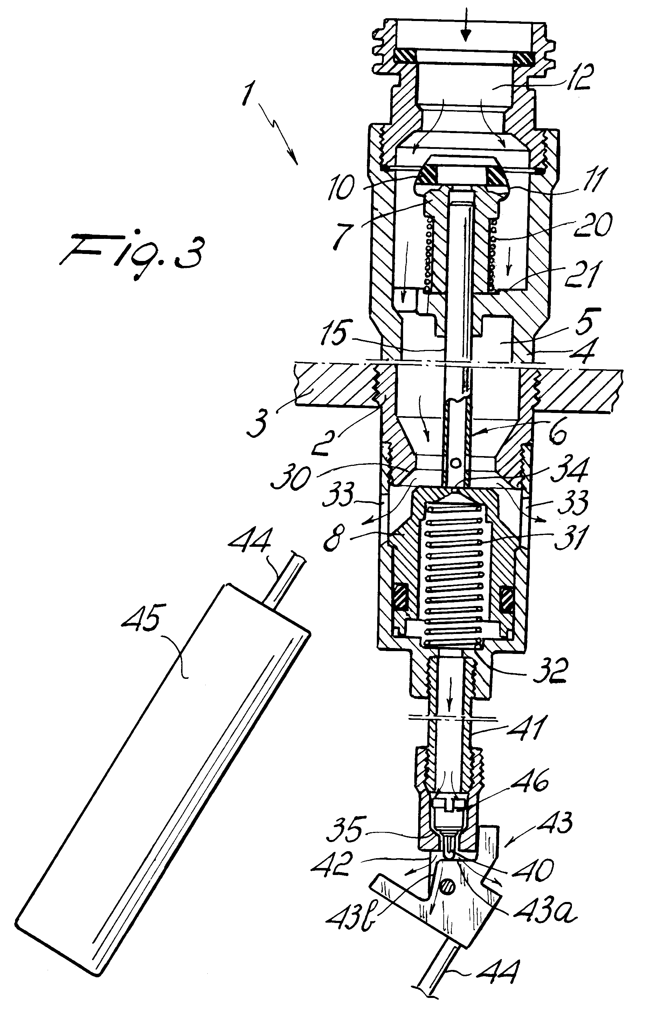

When the preset level is reached, as shown in figure 4, the cam places a recess 43b at the end of the tip 40, so that an additional descent of the third piston 46 is allowed; the third piston arranges itself so as to close an abutment 35 and accordingly the connection to the inside of the liquid tank provided by the hole 34 formed on the piston 8 is cut off.

In this condition, the liquid that arrives from the hole 34 provided on the piston 8 accumulates inside the tubular extension 41 and shifts the piston 8 until contact with the inner seat 30 occurs.

When the piston 8 is in contact with the inner seat 30, the tank filling stream is stopped automatically, since the piston 8 is in the closure position.

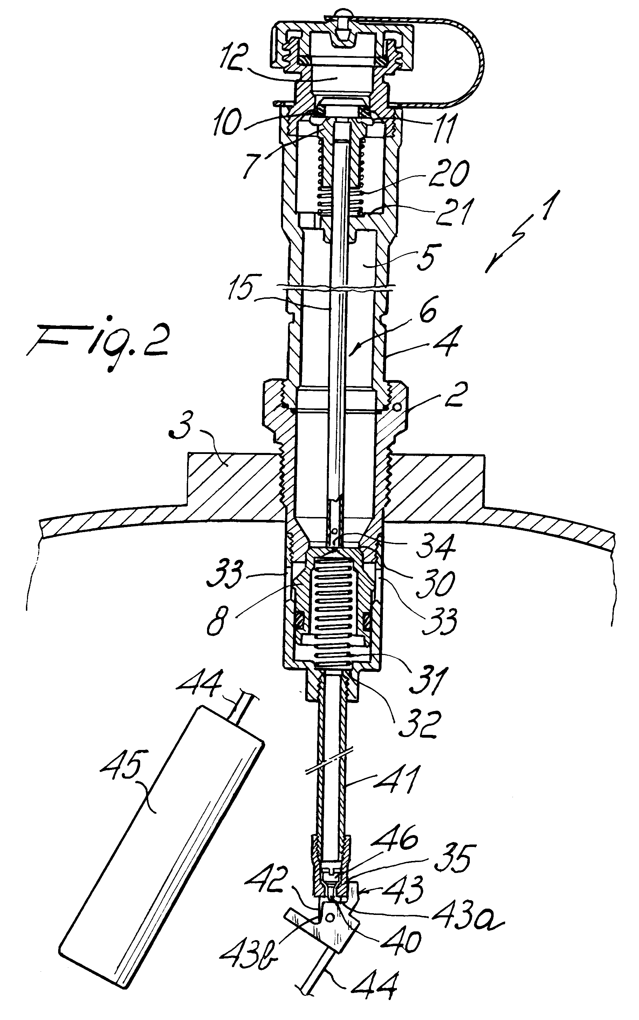

When the thrust produced by the gas in the filling direction becomes zero because the pump of the tanker truck used for filling is switched off, the first piston 7 is moved so as to close against the seat 11 by the spring 20 and the pressure inside the valve, as a consequence of the nonhermetic closure of the second piston 8 and of the reduced passage of the hole 47, balances with the pressure inside the tank and allows the third piston, when the level of the liquid drops, to return to the condition of figure 2, being pushed by the plane 43a of the cam 43.

From the above description it is thus evident that the present invention achieves the intended aim and objects, and in particular the fact is stressed that a filling valve for LPG tanks with automatic stop device is provided which allows to have two closure pistons together with a level device which prevents filling of a tank beyond a preset value.

The invention thus conceived is susceptible of numerous modifications and variations, all of which are within the scope of the inventive concept.

All the details may also be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A filling valve for LPG tanks with automatic stop device, comprising a valve body which can be coupled to a tank and forms a channel for connecting the inside and the outside of the tank, characterized in that it comprises, in said channel, a flow cutoff device formed by a first hermetic piston and a second hermetic piston which are operatively interconnected and act respectively on an inlet seat and on an internal seat for connection to the inside of the tank, a level indicator being also provided which controls a third piston which stops the incoming flow, activating the closure of said second piston when said preset level is reached inside said tank.

2. A filling valve according to claim 1, characterized in that it comprises an intermediate extension body which can be hermetically coupled to said valve body and also forms said channel.

3. A filling valve according to claim 1, characterized in that said first and second hermetic piston are operatively interconnected by means of a rod which is associated with said first piston and acts by pushing on said second piston.

4. A filling valve according to claim 1, characterized in that it comprises a first pusher spring which acts on intermediate spokes and on the body of said first piston to push it sealingly against said inlet seat.

5. A filling valve according to claim 1, characterized in that it comprises, downstream of said internal seat, in the gas stream inflow direction, a port which is connected to the inside of said tank.

6. A filling valve according to claim 1, characterized in that it comprises a third piston which acts on a cam element which is formed by said level indicator and is suitable to prevent the engagement of said third piston on said internal seat before reaching the preset level inside the tank.

7. A filling valve according to claim 1, characterized in that it comprises a second pusher spring which acts on the bottom of a sliding chamber and on a body of said second piston in order to push it closed onto said internal seat when the pressure for introducing the fluid into the tank ceases.

8. A filling valve according to claim 6, characterized in that it comprises, on a tubular extension that connects said second piston and said third piston, a hole for rebalancing the pressure inside the valve and the pressure inside the tank at the end of the filling operation.

9. A filling valve according to one or more of the preceding claim 8, characterized in that said rebalancing hole is constituted by a notch formed between the closure seat and said third piston.
